# FASCICULE DE BREVET EUROPEEN

(11) **EP 2 589 253 B1**
(45) Date de publication et mention de la délivrance du brevet: **01.04.2015**
(21) Numéro de dépôt: 11737994.1
(22) Date de dépôt: 20.06.2011
(51) Int. Cl.: H04W 72/04

(54) **PROCEDE DE COMMUNICATION**
KOMMUNIKATIONSVERFAHREN
COMMUNICATION METHOD

(30) Priorité: 26.11.2010 FR 1059784; 29.06.2010 FR 1055191
(43) Date de publication de la demande: 08.05.2013
(73) Titulaire: Orange, 75015 Paris (FR)
(72) Inventeur: LAMPIN, Quentin, F-38000 Grenoble (FR); BARTHEL, Dominique, F-38190 Bernin (FR); AUGE-BLUM, Isabelle, 69100 Vilieurbanne (FR); VALOIS, Fabrice, 69003 Lyon (FR)
(74) Mandataire: Fontenelle, Sandrine
(86) Numéro de dépôt international: PCT/FR2011/051413
(87) Numéro de publication internationale: WO 2012/001266

(56) Documents cités:
- US-A1- 2008 219 286
- US-A1- 2009 310 571

## Description

### Arrière-plan de l'invention

L'invention se rapporte au domaine général des télécommunications. L'invention se rapporte en particulier à un protocole d'accès au médium.

Dans un réseau de télécommunications dans lequel plusieurs noeuds partagent un même médium de communication, des émissions simultanées peuvent interférer, causant des collisions et des pertes de paquets. C'est notamment le cas dans les réseaux sans fil comme les réseaux maillés sans fil, les réseaux locaux WiFi ou les réseaux basses puissances (LLN pour *« Lossy and Low power Network »).*

De nombreux protocoles d'accès au médium (protocoles MAC pour « *Media Access Control*») ont été conçus pour faire face à ce problème. En particulier, la famille de protocoles IEEE-802.11 concerne les réseaux locaux WiFi et famille de protocoles IEEE-802.15.4 concerne les réseaux personnels sans fil.

Le développement de réseaux de capteurs sans fil a introduit une nouvelle contrainte dans la conception d'un protocole MAC, à savoir l'efficacité en termes de consommation énergétique. Ainsi, des protocoles MAC dit « Ecoute à faible consommation d'énergie » (LPL pour « *Low Power Listening* ») ont été conçus. Dans ce type de protocole, les noeuds sont endormis pendant de longues périodes, et une paire de noeuds émetteur/récepteur peut être sélectionnée pour communiquer pendant une période d'éveil. On peut classer les mécanismes d'évitement des collisions proposés par ces protocoles dans deux catégories : Mécanismes déterministes et mécanismes probabilistes.

Les mécanismes déterministes se basent sur un planning préétabli dans lequel chaque canal logique est dédié à un noeud spécifique. Ces mécanismes s'adaptent mal à un trafic imprévisible ou nécessitant de revoir le planning fréquemment, car cela conduit à une dépense d'énergie importante. De plus, l'extensibilité n'est pas bien assurée car un noeud particulier ne peut utiliser que le canal qui lui est attribué.

Les mécanismes probabilistes sont principalement basés sur un mécanisme d'écoute de la porteuse (CSMA pour « *Carrier Sens Multiple Access* »)*.* En particulier, plusieurs protocoles utilisent une connaissance partagée du temps par les noeuds pour déterminer, pendant une fenêtre de contention fixe, le noeud qui pourra émettre pendant la période d'éveil suivante.

Par exemple, le document K. Jamieson, H. Balakrishnan, et Y.C. Tay, « Sift : A MAC protocol for event-driven wireless sensor networks », dans EWSN (K.Rômer, H. Karl, et F. Mattern, eds), vol. 3868 de Lecture Notes in Computer Science, pp. 260-275, Springer, 2006, décrit un mécanisme dans lequel une période de transmission est précédée d'une fenêtre de contention divisée en CW intervalles de temps. Chaque noeud qui a des données à émettre choisit au hasard un intervalle r parmi les CW intervalles de temps. Ensuite, pendant les intervalles précédant l'intervalle r, le noeud écoute et passe son tour s'il entend une transmission. Si lors de l'intervalle r, le noeud n'a pas passé son tour, il émet un signal pour marquer l'intervalle de temps r et vérifie qu'aucune collision n'a eu lieu. A la fin de la fenêtre de contention, le noeud qui a pu émettre pendant l'intervalle de temps qu'il avait choisi détermine qu'il peut émettre des données pendant la période de transmission qui suit.

Cette solution permet de déterminer le noeud unique qui peut émettre pendant la prochaine allocation du medium, et ce de manière locale, c'est-à-dire en se basant uniquement sur des informations disponibles au niveau de chaque noeud. De plus, le dimensionnement du mécanisme (c'est-à-dire le nombre d'intervalles de la fenêtre de contention et la fonction de probabilité utilisée pour choisir un intervalle au hasard) peut ne dépend que de la charge du trafic, pas des propriétés du réseau. Enfin, cette solution permet de s'adapter à un trafic variable, en rafale.

Cependant, l'utilisation de la bande passante disponible reste limitée. En effet, si le noeud sélectionné a peu de données à émettre par rapport à la capacité du medium pendant la durée d'allocation, cette capacité est sous-utilisée, car aucun autre noeud ne peut accéder au médium pendant cette durée.

On rencontre le même problème dans le document US 2008/0219286, qui décrit un mécanisme d'évitement des collisions, dans lequel une unique station est sélectionnée pour émettre dans un second intervalle de temps, en fonction de la réception ou non de messages de contention dans un premier intervalle de temps.

### Objet et résumé de l'invention

L'invention vise à fournir un procédé de communication qui ne présente pas au moins certains des inconvénients précités. En particulier, l'invention vise à permettre une bonne utilisation de la bande passante disponible.

A cet effet, l'invention concerne un procédé de communication exécuté par un noeud d'un réseau de télécommunication, ledit noeud ayant une transmission de données à effectuer, ledit procédé comprenant :
- une étape de sélection d'un intervalle de temps j dans une fenêtre de contention comprenant plusieurs intervalles de temps et précédant une période de transmission,
- une étape d'écoute des intervalles de temps précédant l'intervalle de temps j,
caractérisé en ce que ladite période de transmission présente plusieurs canaux de transmission, et en ce que le procédé comprend :
- une étape de comptage d'un nombre d'émissions pendant lesdits intervalles de temps précédant l'intervalle de temps j,
- lorsque le nombre d'émissions est supérieur à un seuil prédéterminé, une étape de report ou d'annulation de ladite transmission de données,
- lorsque le nombre d'émissions est inférieur ou égal au seuil prédéterminé, une étape d'émission pendant l'intervalle de temps j et une étape de détermination d'un desdits canaux de transmission, en fonction dudit nombre d'émissions.

Grâce à ces caractéristiques, l'invention permet de sélectionner plusieurs noeuds auxquels elle donne l'autorisation de transmettre pendant une période de transmission comprenant plusieurs canaux de transmission. En effet, lorsque plusieurs noeuds exécutent ce procédé en parallèle, tous les noeuds qui ont sélectionné un intervalle de temps parmi les premiers intervalles de temps compteront un nombre d'émissions inférieur ou égal au seuil et émettront pendant l'intervalle de temps qu'ils ont sélectionné. Ainsi, ces noeuds seront sélectionnés pour poursuivre la transmission. Les autres noeuds reportent ou abandonnent leur transmission de données. Ainsi, même si la durée de transmission nécessitée par un noeud est plus faible que la durée de la période de transmission, la bande passante disponible peut être utilisée par d'autres noeuds. L'invention permet donc une meilleure utilisation de la bande passante disponible.

De plus, ce procédé de communication fait appel uniquement à des informations disponibles au niveau de chaque noeud. Ainsi, l'invention permet une planification locale des transmissions.

L'étape de détermination peut comprendre une étape de participation à un mécanisme de sélection utilisant une fenêtre de contention déterminée en fonction dudit nombre d'émissions et, si le noeud est sélectionné lors dudit mécanisme de sélection, la détermination d'un desdits canaux de transmission correspondant à ladite fenêtre de contention.

Ainsi, si plusieurs noeuds ont sélectionné un même intervalle de temps et donc ont compté le même nombre d'émissions, le mécanisme de sélection permet de sélectionner un de ces noeuds pour le canal de transmission correspondant à la fenêtre de contention.

L'étape de détermination peut également comprendre, si ledit noeud n'est pas sélectionné lors dudit mécanisme de sélection, une deuxième étape de participation à un deuxième mécanisme de sélection utilisant une deuxième fenêtre de contention.

Cela permet de privilégier les noeuds qui avaient participé au premier mécanisme de sélection, en leur permettant de participer au deuxième mécanisme de sélection s'ils n'ont pas été sélectionnés.

Le procédé de communication peut comprendre, après ladite étape de détermination, une étape d'envoi d'un message d'annonce indiquant une destination de ladite transmission de données à effectuer. Le procédé de communication peut également comprendre, après ladite étape d'envoi, une étape de mise en sommeil jusqu'à ladite transmission de données. Le procédé de communication peut aussi comprendre, après ladite étape de report ou d'annulation, une étape de réception d'un message d'annonce indiquant une transmission de données dont ledit noeud est la destination, et une étape de mise en sommeil jusqu'à ladite transmission de données dont ledit noeud est la destination.

Grâce à ces caractéristiques, le noeud économise de l'énergie par une mise en sommeil en attendant la transmission de données dont il est la source ou la destination.

Selon un mode de réalisation, le procédé de communication comprend en outre :
- une étape de comptage d'un nombre total d'émissions pendant lesdits intervalles de temps, et
- lorsque le nombre total d'émissions est inférieur au seuil prédéterminé, une seconde étape de détermination d'au moins un desdits canaux de transmission, en fonction dudit nombre total d'émissions.

Dans ce cas, lorsque le nombre de noeuds ayant des données à transmettre est inférieur au nombre de canaux de transmission, l'invention permet d'autoriser au moins un noeud à transmettre dans plusieurs canaux de transmission. Cela permet à un noeud d'émettre une quantité plus importante de données. Ainsi, l'utilisation de la bande passante est améliorée lorsque peu de noeuds ont des données à transmettre.

La seconde étape de détermination peut comprendre une étape de participation à au moins un mécanisme de sélection utilisant une fenêtre de contention déterminée en fonction dudit nombre total d'émissions et, si le noeud est sélectionné lors dudit mécanisme de sélection, la détermination d'un desdits canaux de transmission correspondant à ladite fenêtre de contention.

Le mécanisme de sélection permet de sélectionner un noeud parmi plusieurs noeuds qui, après avoir compté le même nombre total d'émissions, participent au mécanisme de sélection.

L'invention concerne aussi un noeud de communication destiné à effectuer une transmission des données dans un réseau de télécommunication, ledit noeud comprenant :
- des moyens de sélection d'un intervalle de temps j dans une fenêtre de contention comprenant plusieurs intervalles de temps et précédant une période de transmission,
- des moyens d'écoute des intervalles de temps précédant l'intervalle de temps j,
caractérisé en ce que ladite période de transmission présente plusieurs canaux de transmission, et en ce que le noeud comprend :
- des moyens de comptage d'un nombre d'émissions pendant lesdits intervalles de temps précédant l'intervalle de temps j,
- des moyens de report ou d'annulation de ladite transmission de données lorsque le nombre d'émissions est supérieur à un seuil,
- des moyens d'émission pendant l'intervalle de temps j et des moyens de détermination d'un desdits canaux de transmission, en fonction dudit nombre d'émissions, lorsque le nombre d'émissions est inférieur ou égal au seuil.

L'invention se rapporte aussi à un réseau de communication comprenant une pluralité de noeuds selon l'invention.

Les avantages et caractéristiques discutés en rapport au procédé de communication s'appliquent de manière correspondante au noeud et au réseau.

L'invention vise aussi un programme d'ordinateur comportant des instructions pour l'exécution des étapes du procédé de communication précité lorsque ledit programme est exécuté par un ordinateur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'enregistrement ou support d'informations lisible par un ordinateur, et comportant des instructions d'un programme d'ordinateur tel que mentionné ci-dessus.

Les supports d'enregistrement mentionnés ci-avant peuvent être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, les supports d'enregistrement peuvent correspondre à un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, les supports d'enregistrement peuvent correspondre à un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue schématique d'un réseau selon un mode de réalisation de l'invention,
- la figure 2 représente un exemple de déroulement d'une communication dans le réseau de la figure 1,
- les figures 3 à 6 sont des diagrammes d'étapes qui illustrent un procédé de communication selon un premier mode de réalisation de l'invention, et
- La figure 7 est un diagramme d'étapes qui illustre des étapes d'un procédé de communication selon un deuxième mode de réalisation de l'invention,
- la figure 8 représente un exemple de déroulement d'une communication dans le réseau de la figure 1, lorsque les noeuds mettent en oeuvre le procédé de communication selon le deuxième mode de réalisation de l'invention.

### Description détaillée de modes de réalisation

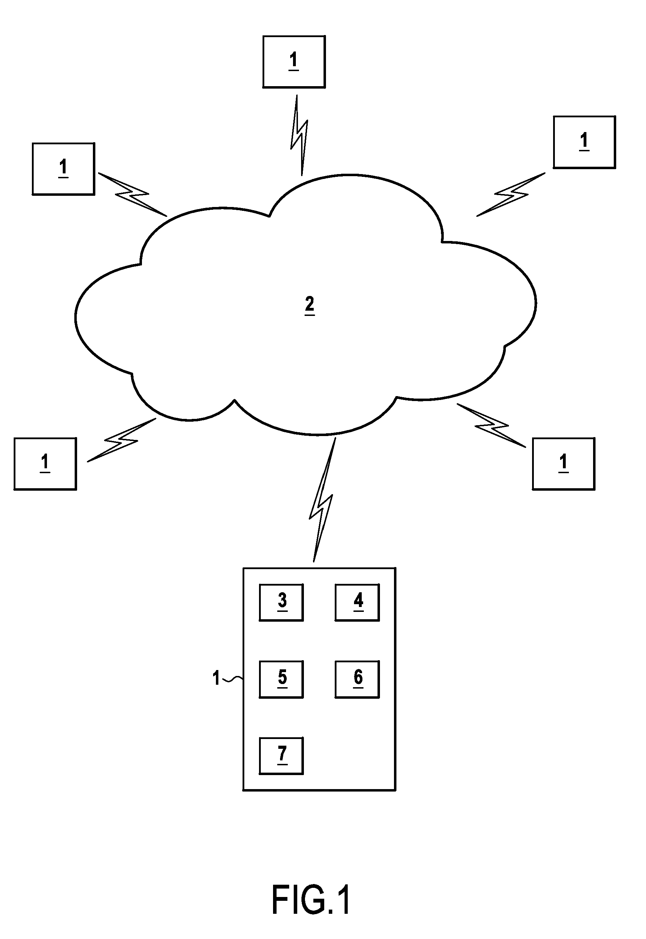

La **figure 1** représente un réseau 2 comprenant plusieurs noeuds 1. Le réseau 2 est par exemple un réseau sans fil de capteurs à basse consommation, dans lequel les noeuds 1 peuvent commuter entre un état de sommeil dans lequel ils consomment peu d'énergie et un état éveillé dans lequel ils peuvent envoyer et recevoir des données, en particulier des données relatives à des valeurs mesurées par des capteurs. Toutefois, l'invention n'est pas limitée à ce type de réseau et peut notamment concerner un réseau de liens sur toute sorte de medium partagé.

Chaque noeud 1 présente l'architecture matérielle d'un ordinateur. L'un des noeuds 1 est représenté de manière plus détaillée sur la figure 1 et comprend un microprocesseur 3, une mémoire morte 4, une mémoire vive 5, une interface de communication 6 et un port d'entrée 7. Le microprocesseur 3 permet d'exécuter des programmes mémorisés dans la mémoire morte 4, en utilisant la mémoire vive 5. L'interface de communication 6 permet de communiquer par liaison sans fil avec les autres noeuds 1 du réseau 2. Enfin, le port d'entrée 7 permet d'acquérir la valeur d'un signal de mesure.

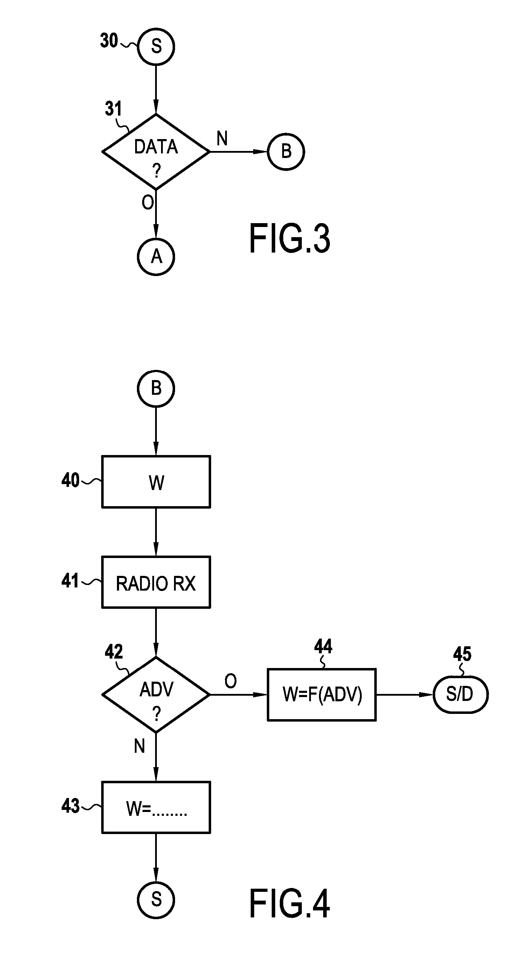

La mémoire morte 4 constitue un support d'information lisible par le microprocesseur 3. Elle comporte des instructions d'un programme d'ordinateur dont les principales étapes représentées sous forme d'organigrammes aux figures 3 à 6 permettent l'exécution d'un procédé de communication selon un premier mode de réalisation de l'invention, mis en oeuvre par le noeud 1.

Périodiquement ou en fonction de la valeur du signal de mesure acquise sur son port d'entrée 7, chaque noeud 1 décide de transmettre des données sur le réseau 2. Pour éviter des collisions et pertes de paquets, chaque noeud 1 met en oeuvre un mécanisme d'évitement des collisions décrit plus en détail ci-après.

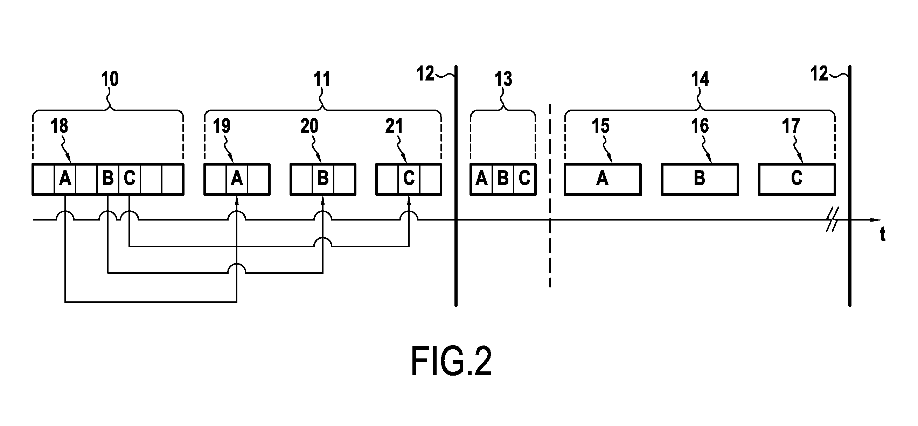

La **figure 2** représente, en fonction du temps, le déroulement d'une communication sur le réseau 2. Les noeuds 1 ont une connaissance partagée du temps t. Ainsi, ils peuvent commuter périodiquement dans leur état éveillé à des instants 12 communs à tous les noeuds 1. Le déroulement de la communication comprend deux phases 10, 11 qui précèdent un instant 12 de commutation à l'état éveillé, et deux phases 13 et 14 qui suivent l'instant 12.

Les phases 10 et 11 ont pour but de déterminer les noeuds 1 qui vont être autorisés à émettre. La phase 13 est une phase d'annonce dans laquelle les noeuds 1 autorisés à émettre indiquent les noeuds 1 de destination de leur communication. Enfin, la phase 14 est une période de transmission pendant laquelle les noeuds 1 autorisés à émettre émettent les données à transmettre.

La période de transmission de la phase 14 présente plusieurs canaux de transmission. Dans l'exemple représenté sur la figure 2, la période de transmission comprend trois canaux de transmission 15, 16 et 17 multiplexés temporellement. En variante, la période de transmission pourrait comprendre plus ou moins de canaux de transmission. En variante également, les canaux de transmission pourraient être multiplexés en fréquence.

Les phases 10 et 11 permettent la mise en oeuvre d'un mécanisme d'évitement des collisions en deux parties, qui a pour but de sélectionner les trois noeuds 1 qui vont être autorisés à émettre respectivement dans les canaux de transmissions 15, 16 et 17. Bien entendu, si la période de transmission comprend plus ou moins de trois canaux de transmission, le nombre de noeuds 1 sélectionnés pendant les phases 10 et 11 est adapté en conséquence.

Les figures 3 à 6 sont des diagrammes d'étapes représentant le procédé de communication effectué par chaque noeud 1, permettant le déroulement d'une communication selon la figure 2.

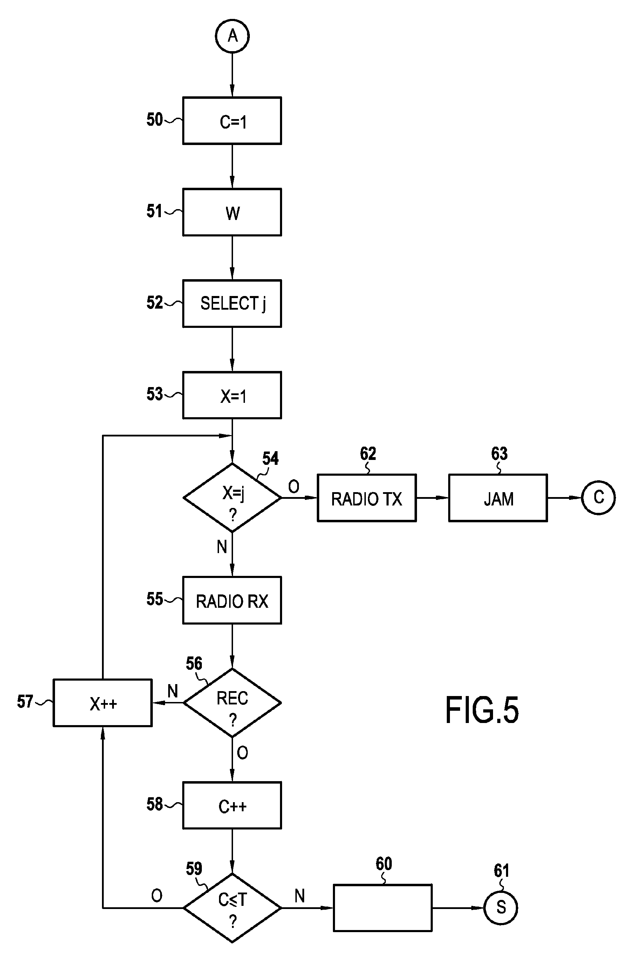

A l'étape 30 de la **figure 3****,** qui précède la phase 10, le noeud 1 est dans son état de sommeil, ce qui est représenté par le symbole S sur les figures. A l'étape 31, le noeud 1 détermine s'il a des données à transmettre. Si le noeud 1 n'a pas de données à transmettre, il passe à l'étape 40 de la figure 4. S'il a des données à transmettre, il passe à l'étape 50 de la figure 5.

La **figure 4** représente donc les étapes effectuées par un noeud 1 qui n'a pas de données à transmettre. A l'étape 40, le noeud 1 attend l'instant 12 pour commuter dans son l'état éveillé, ce qui est représenté par le symbole W. Puis, à l'étape 41, le noeud 1 écoute les éventuels messages reçus sur son interface de communication 6, ce qui est symbolisé par RADIO RX.

A l'étape 42, le noeud 1 détermine si l'un des messages reçus est un message d'annonce d'une communication dont il est la destination, ce qui est symbolisé par « ADV ? ».

Si aucun message d'annonce n'indique une communication dont il est la destination, le noeud 1 programme, à l'étape 43, son prochain instant 12 de commutation à l'état éveillé, ce qui est symbolisé par « W = ... ». Enfin, le noeud 1 commute dans l'état de sommeil.

Si une annonce indique une communication dont il est la destination, le noeud 1 programme, à l'étape 44, son prochain instant de commutation à l'état éveillé en fonction du canal de transmission indiqué dans le message d'annonce, ce qui est symbolisé par « W = F(ADV) ». Par exemple, si le noeud 1 est la destination d'une communication dans le canal de transmission 17, le noeud 1 prévoit de commuter dans l'état éveillé juste avant le début de la transmission dans le canal de transmission 17.

Puis, à l'étape 45, le noeud 1 commute à l'état de sommeil en attendant de recevoir des données, ce qui est symbolisé par S/D.

Les étapes 40 à 45 de la figure 4 correspondent, pour un noeud 1 qui n'a pas de données à transmettre, à la phase 13 de la figure 2.

La **figure 5** représente les étapes effectuées par un noeud 1 qui a de données à transmettre, pendant la phase 10 de la figure 2. La phase 10 permet la mise en oeuvre d'une première partie du mécanisme d'évitement des collisions, en utilisant une fenêtre de contention 18 divisée en plusieurs intervalles de temps. Sur la figure 2, la fenêtre de contention 18 est divisée en sept intervalles de temps. En variante, la fenêtre de contention 18 pourrait être divisée en plus ou moins d'intervalles de temps.

A l'étape 50, le noeud 1 initialise un compteur c à 1. Puis, à l'étape 51, le noeud 1 attend un instant correspondant au début de la phase 10 pour commuter à l'état éveillé.

A l'étape 52, le noeud 1 sélectionne au hasard un intervalle de temps j dans la fenêtre de contention 18. La fonction de probabilité utilisée pour sélectionner l'intervalle de temps j est de préférence une distribution croissante géométriquement, du type décrit dans le document Sift cité en introduction.

Ensuite, à l'étape 53, un compteur x représentant l'intervalle courant est initialisé à 1. Puis, à l'étape 54, le noeud 1 détermine si l'intervalle courant représenté par le compteur x correspond à l'intervalle de temps j sélectionné.

Dans la négative, à l'étape 55, le noeud 1 écoute les éventuels messages reçus sur son interface de communication 6. A l'étape 56, si aucun message n'a été reçu, le noeud 1 passe à l'étape 57, incrémente le compteur x puis boucle sur l'étape 54.

Par contre, si un message a été reçu, le noeud 1 passe à l'étape 58 et incrémente le compteur c. Ensuite, à l'étape 59, le noeud 1 compare le compteur c à un seuil T. Le seuil T correspond au nombre de canaux de transmission dans la période de transmission. Ainsi, T = 3 dans l'exemple de la figure 2.

Si le compteur c est inférieur ou égale à T, le noeud 1 passe à l'étape 57 où le compteur x est incrémenté, puis boucle à l'étape 54. Si le compteur c est supérieur à T, le noeud 1 passe à l'étape 60 dans laquelle il décide d'annuler ou de reporter la transmission de données à effectuer, puis commute à l'état de sommeil à l'étape 61. Après l'étape 61, le noeud 1 est considéré comme un noeud 1 n'ayant pas de données à transmettre et effectuera donc les étapes 40 à 45 de la figure 4.

Si, à l'étape 54, l'intervalle courant représenté par le compteur x correspond à l'intervalle de temps j sélectionné, le noeud 1 passe aux étapes 62 et 63 dans lesquelles il émet un message. Le message est par exemple un signal de brouillage, ce qui est représenté par le symbole JAM. Ainsi, l'intervalle de temps j est marqué par le noeud 1.

En écoutant les messages reçus à l'étape 55 et en incrémentant les compteurs c et x, le noeud 1 peut donc compter les intervalles de temps précédant celui qu'il a sélectionné, qui ont été marqués par d'autres noeuds 1. En effet, pour chaque intervalle de temps précédant l'intervalle de temps j sélectionné, un autre noeud peut envoyer un signal de brouillage JAM. Dans ce cas, le noeud 1 passe à l'étape 58 et incrémente le compteur c.

Si plus de T intervalles de temps précédant celui qu'il a sélectionné ont été marqués par d'autres noeuds, le noeud 1 considère, à l'étape 59, qu'il ne peut pas transmettre ses données et passe aux étapes 60 et 61. Par contre, si à l'étape 54, l'intervalle courant représenté par le compteur x correspond à l'intervalle de temps j sélectionné, cela signifie que le compteur c est inférieur ou égal à T. Autrement dit, le nombre d'intervalles de temps marqués par d'autres noeuds avant l'intervalle de temps j sélectionné par le noeud 1, qui correspond à c-1, est inférieur à T-1. Ainsi, le noeud 1 peut marquer l'intervalle de temps j aux étapes 62 et 63 puis poursuivre le déroulement du mécanisme d'évitement des collisions en participant, pendant la phase 11 de la figure 2, à une deuxième partie du mécanisme d'évitement des collisions.

Les noeuds 1 qui participent à la deuxième partie du mécanisme d'évitement des collisions sont donc les noeuds 1 qui ont des données à transmettre et qui ont pu marquer un intervalle de temps j sélectionné pendant la phase 10. Ainsi, pour chaque noeud 1 qui participe à cette deuxième partie, le compteur c a une valeur comprise entre 1 et T.

Comme le représente la figure 2, la deuxième partie du mécanisme d'évitement des collisions utilise T fenêtres de contention, c'est-à-dire trois fenêtres de contention 19, 20 et 21 dans l'exemple représenté. Le compteur c de chaque noeud 1 permet de lui assigner une des fenêtres de contention 19, 20 et 21 pour la deuxième partie du mécanisme d'évitement des collisions.

Ainsi, selon l'invention, un mécanisme de sélection est mis en oeuvre dans chaque fenêtre de contention 19, 20 et 21 permettant de sélectionner un unique noeud 1 autorisé à transmettre dans le canal de transmission 15, 16 ou 17 correspondant respectivement à la fenêtre de contention 19, 20 ou 21. Cette deuxième partie du mécanisme d'évitement des collisions est utile car, pendant la première partie, plusieurs noeuds 1 peuvent avoir sélectionné un même intervalle de temps à l'étape 55 et donc avoir la même valeur du compteur c.

Avantageusement, un noeud 1 qui n'a pas été sélectionné par le mécanisme de sélection de la fenêtre de contention 19 peut participer au mécanisme de sélection de la fenêtre de contention 20, et un noeud 1 qui n'a pas été sélectionné par le mécanisme de sélection de la fenêtre de contention 20 peut participer au mécanisme de sélection de la fenêtre de contention 21.

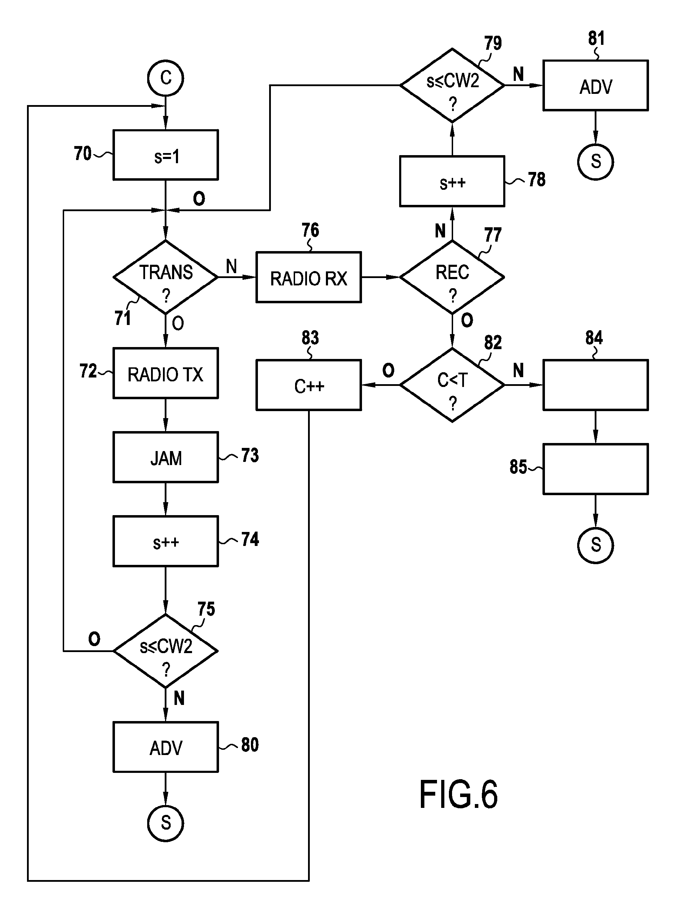

La figure 6 représente un exemple de mécanisme de sélection mis en oeuvre lors des fenêtres de contention 19, 20 et 21. Dans cet exemple, le mécanisme de sélection est un mécanisme du type décompte binaire (BCM pour « *Binary Countdown Mechanism* »), dans lequel chaque fenêtre de contention est divisée en CW2 intervalles de temps, chaque intervalle de temps étant considéré comme un tour de sélection. D'autres mécanismes pourraient être utilisés en variante.

Le noeud 1 participe au mécanisme de sélection de la fenêtre de contention 19, 20 ou 21, en fonction de la valeur de son compteur c.

A l'étape 70, le noeud 1 initialise à 1 un compteur s représentant un intervalle courant de la fenêtre de contention. Ensuite, à l'étape 71, le noeud 1 décide au hasard s'il émet un message pour marquer l'intervalle courant représenté par le compteur s. Dans l'affirmative, aux étapes 72 et 73, le noeud 1 envoie un message de brouillage JAM puis, à l'étape 74, incrémente le compteur s.

A l'étape 75, le noeud 1 détermine si le compteur s est inférieur ou égal au nombre CW2 d'intervalles de temps dans la fenêtre de contention.

Dans l'affirmative, cela signifie que l'intervalle de temps marqué à l'étape 73 n'était pas le dernier intervalle de temps de la fenêtre de contention. Le noeud 1 boucle donc à l'étape 71. Par contre, si l'intervalle de temps marqué à l'étape 73 était le dernier intervalle de temps de la fenêtre de contention, le noeud 1 considère qu'il a été sélectionné pour émettre en utilisant le canal de transmission correspondant à son compteur c, et passe donc à l'étape 80.

L'étape 80 correspond à la phase 13 de la figure 2, dans laquelle les noeuds 1 sélectionnés pour émettre envoient un message d'annonce indiquant la destination de leur transmission. Ensuite, le noeud 1 commute à l'état de sommeil jusqu'au début du canal de transmission qui lui a été attribué.

Si, à l'étape 71, le noeud 1 décide de ne pas marquer l'intervalle courant représenté par le compteur s, il passe à l'étape 76 où il écoute les éventuels messages de brouillage reçus. A l'étape 77, il détermine si un message de brouillage a été reçu.

Si, à l'étape 77, un message de brouillage a été reçu, le noeud 1 considère qu'il n'a pas été sélectionné pour émettre par le mécanisme de sélection correspondant à la fenêtre de contention en cours. A l'étape 82, il compare le compteur c avec T. Si le compteur c est inférieur à T, cela signifie que la fenêtre de contention en cours n'était pas la dernière fenêtre de contention. Ainsi, le noeud 1 incrémente son compteur c à l'étape 83 puis boucle à l'étape 70 pour participer au mécanisme de sélection de la fenêtre de contention suivante. Par contre, si la fenêtre de contention était la dernière, le noeud 1 considère qu'il n'a pas été sélectionné pour émettre par le mécanisme d'évitement des collisions. Ainsi, à l'étape 84, il décide d'annuler ou de reporter la transmission de données à effectuer, et à l'étape 85, il planifie de commuter à l'état éveillé à l'instant 12 avant de commuter à l'état de sommeil. Après l'étape 85, le noeud 1 est considéré comme un noeud 1 n'ayant pas de données à transmettre et effectuera donc les étapes 40 à 45 de la figure 4.

Par contre, si, à l'étape 77, aucun message de brouillage n'a été reçu, le noeud 1 poursuit le mécanisme de sélection de la fenêtre de contention en cours. Ainsi, à l'étape 78, il incrémente le compteur s puis détermine, à l'étape 79, si l'intervalle courant était le dernier de la fenêtre de contention. Dans la négative, c'est-à-dire si l'intervalle de temps courant n'est pas le dernier intervalle de temps de la fenêtre de contention, le noeud 1 boucle à l'étape 71. Par contre, si l'intervalle de temps courant était le dernier intervalle de temps de la fenêtre de contention, le noeud 1 considère qu'il a été sélectionné pour émettre et passe donc à l'étape 81 identique à l'étape 80 précité.

En se référant de nouveau à la figure 2, on donne maintenant une description plus détaillée du déroulement de la communication représentée.

On considère que cinq noeuds 1 ont des données à transmettre. Lors de la première partie du mécanisme d'évitement des collisions, c'est-à-dire pendant la phase 10 et les étapes de la figure 5, ces cinq noeuds 1 sélectionnent respectivement, à l'étape 52 de la figure 5, les intervalles de temps n° 2, 4, 5, 6 et 7.

Les intervalles de temps n°2, 4 et 5 sont donc marqués par les noeuds 1 correspondant, ce qui est représenté par les lettres A, B et C. Par contre, les deux noeuds 1 qui ont sélectionnés les intervalles de temps n° 6 et 7 compteront trois intervalles de temps marqués avant le leur, et décideront donc d'annuler ou de reporter leur transmission puis de passer dans l'état de sommeil, selon les étapes 59, 60 et 61 de la figure 5.

Après l'étape 63, les trois noeuds 1 qui ont marqué les intervalles de temps n°2, 4 et 5 ont leur compteur c valant respectivement 1, 2 et 3. Ainsi, le noeud 1 ayant marqué l'intervalle de temps n°2 a son compteur c valant 1 et participe donc, pendant la phase 11, au mécanisme de sélection de la fenêtre de contention 19. De manière correspondante, le noeud 1 ayant marqué l'intervalle de temps n°4 a son compteur c valant 2 et participe donc, pendant la phase 11, au mécanisme de sélection de la fenêtre de contention 20, et le noeud 1 ayant marqué l'intervalle de temps n°5 a son compteur c valant 3 et participe donc, pendant la phase 11, au mécanisme de sélection de la fenêtre de contention 21.

Chacun de ces trois noeuds 1 étant seul à participer au mécanisme de sélection de sa fenêtre de contention respective, il sera sélectionné comme noeud autorisé à émettre. Bien entendu, si plusieurs noeuds 1 avaient sélectionné le même intervalle de temps pendant la phase 10, ils participeraient tous au mécanisme de sélection de la fenêtre de contention correspondante de la phase 11, conduisant ainsi à l'élimination d'un ou plusieurs noeuds.

Pendant l'étape d'annonce de la phase 13, chacun de ses trois noeuds 1 envoie un message d'annonce indiquant le noeud 1 de destination des données qu'il a à transmettre. Ensuite, chacun des trois noeuds 1 autorisé à transmettre transmet ses données sur le canal de transmission 15, 16 et 17 correspondant à sa fenêtre de contention 19, 20 et 21. Ainsi, dans l'exemple représenté, le noeud 1 qui a sélectionné l'intervalle de temps n° 2 pendant la phase 10 et participé au mécanisme de sélection de la fenêtre de contention 19 pendant la phase 11 transmet ses données dans le canal de transmission 15.

On constate que le procédé décrit ci-dessus permet de sélectionner plusieurs noeuds autorisés à transmettre pendant une période de transmission comprenant plusieurs canaux de transmission. Ainsi, même si la durée de transmission nécessitée par un noeud est plus faible que la durée de la période de transmission, la bande passante disponible peut être utilisée par d'autres noeuds. Par ailleurs, le mécanisme d'évitement des collisions en deux parties permet une sélection efficace des noeuds autorisés à transmettre de manière locale, c'est-à-dire en se basant uniquement sur des informations disponible au niveau de chaque noeud.

Le mécanisme d'évitement des collisions permet également de commuter chaque noeud entre son état de sommeil et son état éveillé, en fonction des besoins. En particulier, grâce à l'étape d'annonce de la phase 13, seuls les noeuds participant à une transmission sont dans l'état éveillé pendant la transmission. Les autres noeuds consomment donc peu d'énergie.

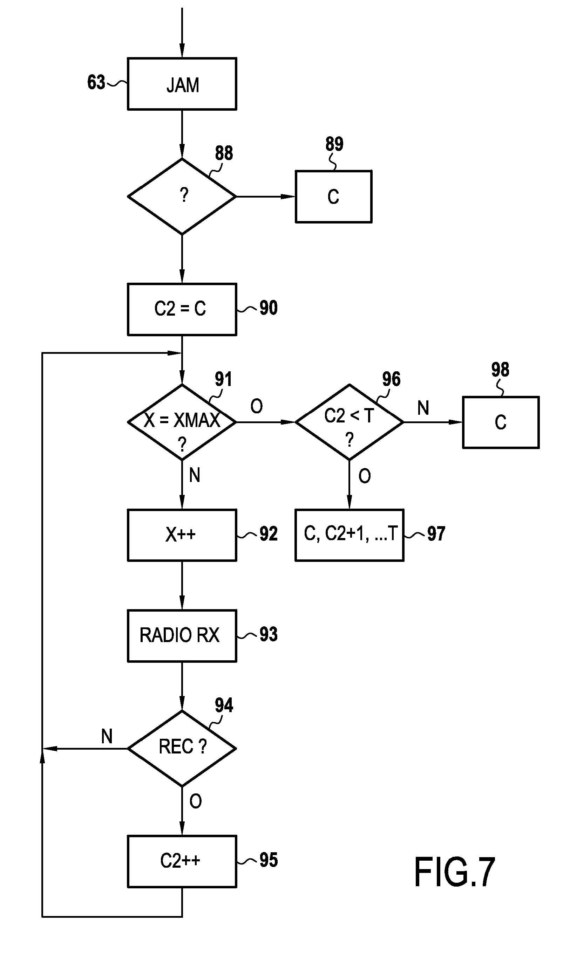

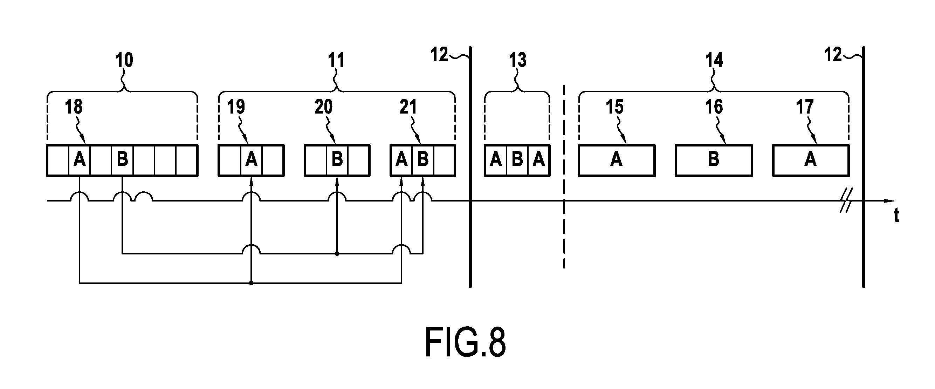

En références aux **figures 7** **et** **8****,** on décrit maintenant un procédé de communication selon un deuxième mode de réalisation de l'invention.

Le procédé de communication selon le deuxième mode de réalisation de l'invention présente des caractéristiques communes avec le premier mode de réalisation de l'invention. En particulier, les étapes décrites précédemment en référence aux figures 3 à 5 sont identiques dans le deuxième mode de réalisation.

Toutefois, dans le deuxième mode de réalisation, un noeud 1 qui a émis un signal de brouillage sur l'intervalle j sélectionné poursuit la phase 10 en écoutant les intervalles suivants et en comptant le nombre total d'intervalles marqués.

Plus précisément, la figure 7 représente des étapes effectuées par un noeud 1 après l'étape 63 de la figure 5.

Après l'étape 63, le compteur c du noeud 1 représente le nombre d'intervalles de temps marqués parmi les intervalles 1 à x, pour x=j, j étant l'intervalle sélectionné par le noeud 1.

A l'étape 88, le noeud 1 teste s'il a une quantité de données à émettre supérieure à la quantité de données qu'il est possible d'émettre sur un canal de transmission pendant une période de transmission. Par exemple, la quantité de données qu'il est possible d'émettre sur un canal de transmission pendant une période de transmission correspond à un paquet de données.

Si le noeud 1 n'a pas plus de données à transmettre que la quantité de données qu'il est possible d'émettre sur un canal de transmission pendant une période de transmission, le noeud 1 passe à l'étape 89 où il décide de participer uniquement au mécanisme de sélection de la fenêtre de contention 19, 20 ou 21 indiquée par son compteur c. Il se met en veille pendant le reste de la fenêtre de contention 18, ce qui permet une économie d'énergie.

Par contre, si le noeud 1 a plus de données à transmettre que la quantité de données qu'il est possible d'émettre sur un canal de transmission pendant une période de transmission, il passe à l'étape 90.

A l'étape 90, un compteur c2 est initialisé à c. Ensuite, à l'étape 91, le noeud 1 compare le compteur x à xmax, le nombre d'intervalles de temps dans la fenêtre de contention 18 (xmax = 7 dans les exemples représentés sur les figures 2 et 8). Si x est différent de xmax, cela signifie qu'il reste des intervalles de temps à écouter et le noeud 1 passe à l'étape 92.

Ensuite, à l'étape 92, le compteur x est incrémenté. Puis, à l'étape 93, le noeud 1 écoute les éventuels messages reçus sur son interface de communication 6.

A l'étape 94, si un message a été reçu, le noeud 1 passe à l'étape 95, incrémente le compteur c2 puis boucle à l'étape 91. Par contre, si aucun message n'a été reçu, le noeud 1 boucle directement à l'étape 91 sans incrémenter le compteur c2.

Si à l'étape 91 x est égal à xmax, cela signifie que tout les intervalles de temps de la fenêtre de contention 18 ont été écoutés. Le noeud 1 passe alors à l'étape 96.

Les étapes 90 à 95 permettent donc de compter les éventuels intervalles de temps de la fenêtre de contention 18, qui suivent l'intervalle j sélectionné par le noeud 1, et qui sont marqués par d'autres noeuds 1. Comme, à l'étape 90, le compteur c2 est initialisé à la valeur du compteur c, le compteur c2 indique, à l'étape 96, le nombre total d'intervalles de temps marqués dans la fenêtre de contention 18.

A l'étape 96, le noeud 1 compare le compteur c2 au seuil T. Comme expliqué précédemment, le seuil T correspond au nombre de canaux de transmission dans la période de transmission. Ainsi, T = 3 dans les exemples des figures 2 et 8.

Si c2 est inférieur au seuil T, cela signifie que moins de T intervalles de temps ont été marqués par des noeuds 1 dans la fenêtre de contention 18. Dans ce cas, le noeud 1 passe à l'étape 97 où il décide de participer, pendant la phase 11, au mécanisme de sélection de la fenêtre de contention 19, 20 ou 21, indiquée par la valeur de son compteur c. De plus, le noeud 1 décide également de participer au mécanisme de sélection de la ou des fenêtres de sélection correspondant à la valeur c2+1 et aux suivantes, jusqu'à la dernière la fenêtre de sélection (correspondant à la valeur T).

Par contre, si c2 n'est pas inférieur au seuil T, cela signifie que T intervalles de temps ont été marqués par des noeuds 1 dans la fenêtre de contention 18. Dans ce cas, le noeud 1 passe à l'étape 98 où il décide de participer, pendant la phase 11, au mécanisme de sélection de la fenêtre de contention 19, 20 ou 21, indiquée par la valeur de son compteur c.

Le déroulement des mécanismes de sélection des fenêtres de contention 19, 20 et 21 peut être le même que celui décrit dans le cadre du premier mode de réalisation, en référence à la figure 6.

Dans le procédé de communication selon le deuxième mode de réalisation, le déroulement d'une communication peut être identique à celui représenté sur la figure 2 si au moins T noeuds ont des données à transmettre. Par exemple, on considère que cinq noeuds 1 ont des données à transmettre. Lors de la première partie du mécanisme d'évitement des collisions, c'est-à-dire pendant la phase 10 et les étapes de la figure 5, ces cinq noeuds 1 sélectionnent respectivement, à l'étape 52 de la figure 5, les intervalles de temps n° 2, 4, 5, 6 et 7.

Les intervalles de temps n°2, 4 et 5 sont donc marqués par les noeuds 1 correspondant, ce qui est représenté par les lettres A, B et C. Par contre, les deux noeuds 1 qui ont sélectionnés les intervalles de temps n° 6 et 7 compteront trois intervalles de temps marqués avant le leur, et décideront donc d'annuler ou de reporter leur transmission puis de passer dans l'état de sommeil, selon les étapes 59, 60 et 61 de la figure 5.

Après l'étape 63, les trois noeuds 1 qui ont marqué les intervalles de temps n°2, 4 et 5 ont leur compteur c valant respectivement 1, 2 et 3. On suppose ici que le test de l'étape 88 conduit à l'étape 90 pour ces trois noeuds 1.

A l'étape 90 de la figure 7, le noeud 1 qui a marqué l'intervalle de temps n°2 initialise donc son compteur c2 à 1, puis l'incrémente à deux reprises à l'étape 95 en raison des intervalles de temps n° 4 et 5 marqués par les autres noeuds 1. Ainsi, son compteur c2 vaudra 3 à l'étape 96 et il passera à l'étape 98.

De manière correspondante, a l'étape 90 de la figure 7, le noeud 1 qui a marqué l'intervalle de temps n°4 initialise son compteur c2 à 2, puis l'incrémente à une reprise à l'étape 95 en raison de l'intervalle de temps n°5 marqué par un autre noeud 1. Ainsi, son compteur c2 vaudra 3 à l'étape 96 et il passera à l'étape 98.

Enfin, a l'étape 90 de la figure 7, le noeud 1 qui a marqué l'intervalle de temps n°5 initialise son compteur c2 à 3, et ne l'incrémente pas car aucun des intervalles de temps suivants n'est marqué par un autre noeud 1. Ainsi, son compteur c2 vaudra 3 à l'étape 96 et il passera à l'étape 98.

Dans ce cas, les trois noeuds ayant marqué les intervalles de temps n°2, 4 et 5 participeront au mécanisme de sélection respectivement de la fenêtre de contention 19, 20 ou 21, puis émettront des données respectivement dans le canal de transmission 15, 16 ou 17, ce qui est représenté par les lettres A, B et C sur la figure 2.

Cependant, si moins de T noeuds 1 ont des données à transmettre, le deuxième mode de réalisation permet à au moins un des noeuds d'utiliser plusieurs des T canaux de transmission. Ceci est illustré par la figure 8 qui représente un exemple de déroulement d'une communication.

On considère que deux noeuds 1 ont des données à transmettre. Lors de la première partie du mécanisme d'évitement des collisions, c'est-à-dire pendant la phase 10 et les étapes de la figure 5, ces deux noeuds 1 sélectionnent respectivement, à l'étape 52 de la figure 5, les intervalles de temps n° 2 et 4.

Les intervalles de temps n°2 et 4 sont donc marqués par les noeuds 1 correspondant, ce qui est représenté par les lettres A et B. Après l'étape 63, les deux noeuds 1 qui ont marqué les intervalles de temps n°2 et 4 ont leur compteur c valant respectivement 1 et 2. On suppose ici que le test de l'étape 88 conduit à l'étape 90 pour ces deux noeuds 1.

A l'étape 90 de la figure 7, le noeud 1 qui a marqué l'intervalle de temps n°2 initialise donc son compteur c2 à 1, puis l'incrémente à une reprise à l'étape 95 en raison de l'intervalle de temps n° 4 marqué par un autre noeud 1. Ainsi, son compteur c2 vaudra 2 à l'étape 96 et il passera à l'étape 97.

De manière correspondante, a l'étape 90 de la figure 7, le noeud 1 qui a marqué l'intervalle de temps n°4 initialise son compteur c2 à 2, et ne l'incrémente pas car aucun des intervalles de temps suivants n'est marqué par un autre noeud 1. Ainsi, son compteur c2 vaudra 2 à l'étape 96 et il passera à l'étape 97

Ainsi, le noeud 1 qui a marqué l'intervalle de temps n°2 participera au mécanisme de sélection de la fenêtre de contention 19 correspondant à son compteur c et au mécanisme de sélection de la fenêtre de contention 21 correspondant à la valeur c2+1. Ceci est représenté par la lettre A sur la figure 18.

De manière correspondante, le noeud 1 qui a marqué l'intervalle de temps n°4 participera au mécanisme de sélection de la fenêtre de contention 20 correspondant à son compteur c et au mécanisme de sélection de la fenêtre de contention 21 correspondant à la valeur c2+1. Ceci est représenté par la lettre B sur la figure 8.

On suppose ici que le noeud 1 représenté par la lettre A gagne le mécanisme de sélection de la fenêtre de contention 21. Ainsi, comme le montre les lettres A et B des phases 13 et 14 de la figure 8, le noeud 1 représenté par la lettre A émet des données dans les canaux de transmission 15 et 17.

On constate que le procédé de communication selon le deuxième mode de réalisation présente les mêmes avantages que le procédé de communication selon le premier mode de réalisation, mais permet en plus, lorsque le nombre de noeuds ayant des données à transmettre est inférieur au nombre de canaux de transmission, d'autoriser au moins un noeud à transmettre dans plusieurs canaux de transmission. Cela permet à un noeud d'émettre une quantité plus importante de données. Ainsi, l'utilisation de la bande passante est améliorée lorsque peu de noeuds ont des données à transmettre.

## Revendications

1. Procédé de communication exécuté par un noeud (1) d'un réseau (2) de télécommunication, ledit noeud (1) ayant une transmission de données à effectuer, ledit procédé comprenant :
- une étape (52) de sélection d'un intervalle de temps j dans une fenêtre de contention (18) comprenant plusieurs intervalles de temps et précédant une période de transmission,
- une étape (55) d'écoute des intervalles de temps précédant l'intervalle de temps j,
**caractérisé en ce que** ladite période de transmission présente plusieurs canaux de transmission (15, 16, 17), et **en ce que** le procédé comprend :
- une étape (58) de comptage d'un nombre d'émissions pendant lesdits intervalles de temps précédant l'intervalle de temps j,
- lorsque le nombre d'émissions est supérieur à un seuil prédéterminé, une étape (60) de report ou d'annulation de ladite transmission de données,
- lorsque le nombre d'émissions est inférieur ou égal au seuil prédéterminé, une étape d'émission (62, 63) pendant l'intervalle de temps j et une étape de détermination d'un desdits canaux de transmission, en fonction dudit nombre d'émissions.

2. Procédé de communication selon la revendication 1, dans lequel ladite étape de détermination comprend une étape de participation à un mécanisme de sélection utilisant une fenêtre de contention (19, 20, 21) déterminée en fonction dudit nombre d'émissions et, si le noeud est sélectionné lors dudit mécanisme de sélection, la détermination d'un desdits canaux de transmission (15, 16, 17) correspondant à ladite fenêtre de contention.

3. Procédé de communication selon la revendication 2, dans lequel ladite étape de détermination comprend, si ledit noeud n'est pas sélectionné lors dudit mécanisme de sélection, une deuxième étape de participation à un deuxième mécanisme de sélection utilisant une deuxième fenêtre de contention (20, 21).

4. Procédé de communication selon la revendication 1, comprenant, après ladite étape de détermination, une étape (80, 81) d'envoi d'un message d'annonce indiquant une destination de ladite transmission de données à effectuer.

5. Procédé de communication selon la revendication 4, comprenant, après ladite étape (80, 81) d'envoi, une étape de mise en sommeil jusqu'à ladite transmission de données.

6. Procédé de communication selon la revendication 1, comprenant, après ladite étape (60) de report ou d'annulation, une étape (41) de réception d'un message d'annonce indiquant une transmission de données dont ledit noeud est la destination, et une étape (45) de mise en sommeil jusqu'à ladite transmission de données dont ledit noeud est la destination.

7. Procédé de communication selon la revendication 1, comprenant en outre :
- une étape (95) de comptage d'un nombre total d'émissions (C2) pendant lesdits intervalles de temps, et
- lorsque le nombre total d'émissions (C2) est inférieur au seuil prédéterminé (T), une seconde étape de détermination d'au moins un desdits canaux de transmission, en fonction dudit nombre total d'émissions (C2).

8. Procédé de communication selon la revendication 7, dans lequel ladite seconde étape de détermination comprend une étape (97) de participation à au moins un mécanisme de sélection utilisant une fenêtre de contention (19, 20, 21) déterminée en fonction dudit nombre total d'émissions et, si le noeud est sélectionné lors dudit mécanisme de sélection, la détermination d'un desdits canaux de transmission (15, 16, 17) correspondant à ladite fenêtre de contention.

9. Noeud (1) de communication destiné à effectuer une transmission des données dans un réseau (2) de télécommunication, ledit noeud (1) comprenant :
- des moyens de sélection d'un intervalle de temps j dans une fenêtre de contention (18) comprenant plusieurs intervalles de temps et précédant une période de transmission,
- des moyens d'écoute des intervalles de temps précédant l'intervalle de temps j,
**caractérisé en ce que** ladite période de transmission présente plusieurs canaux de transmission (15, 16, 17), et **en ce que** le noeud (1) comprend :
- des moyens de comptage d'un nombre d'émissions pendant lesdits intervalles de temps précédant l'intervalle de temps j,
- des moyens de report ou d'annulation de ladite transmission de données lorsque le nombre d'émissions est supérieur à un seuil,
- des moyens d'émission pendant l'intervalle de temps j et des moyens de détermination d'un desdits canaux de transmission, en fonction dudit nombre d'émissions, lorsque le nombre d'émissions est inférieur ou égal au seuil.

10. Réseau (2) de communication comprenant une pluralité de noeuds (1) selon la revendication 9.

11. Programme d'ordinateur comportant des instructions pour l'exécution des étapes du procédé de communication selon la revendication 1 lorsque ledit programme est exécuté par un ordinateur.

12. Support d'informations lisible par un ordinateur et comportant des instructions d'un programme d'ordinateur selon la revendication 11.

## Patentansprüche

1. Kommunikationsverfahren, das von einem Knoten (1) eines Telekommunikationsnetzes (2) ausgeführt wird, wobei der Knoten (1) eine Datenübertragung ausführen soll, wobei das Verfahren Folgendes umfasst:
- einen Schritt (52) zum Auswählen eines Zeitintervalls j in einem Konkurrenzfenster (18), das mehrere Zeitintervalle enthält und das einer Übertragungsperiode vorhergeht,
- einen Schritt (55) des Abtastens der dem Zeitintervall j vorhergehenden Zeitintervalle,
**dadurch gekennzeichnet, dass** die Übertragungsperiode mehrere Übertragungskanäle (15, 16, 17) aufweist und dass das Verfahren Folgendes umfasst:
- einen Schritt (58) des Zählens einer Anzahl von Sendevorgängen während der Zeitintervalle, die dem Zeitintervall j vorhergehen,
- wenn die Anzahl von Sendevorgängen größer als ein vorgegebener Schwellenwert ist, einen Schritt (60) des Berichtens oder Annullierens der Datenübertragung,
- wenn die Anzahl von Sendevorgängen kleiner oder gleich dem vorgegebenen Schwellenwert ist, einen Schritt (62, 63) des Sendens während des Zeitintervalls j und einen Schritt des Bestimmens eines der Übertragungskanäle als Funktion der Anzahl von Sendevorgängen.

2. Kommunikationsverfahren nach Anspruch 1, wobei der Bestimmungsschritt einen Schritt des Teilnehmens an einem Auswahlmechanismus, der ein Konkurrenzfenster (19, 20, 21) verwendet, das als Funktion der Anzahl von Sendevorgängen bestimmt wird, und, falls der Knoten von dem Auswahlmechanismus ausgewählt wird, das Bestimmen eines der Übertragungskanäle (15, 16, 17), der dem Konkurrenzfenster entspricht, umfasst.

3. Kommunikationsverfahren nach Anspruch 2, wobei der Bestimmungsschritt dann, wenn der Knoten von dem Auswahlmechanismus nicht ausgewählt wird, einen zweiten Schritt des Teilnehmens an einem zweiten Auswahlmechanismus, der ein zweites Konkurrenzfenster (20, 21) verwendet, umfasst.

4. Kommunikationsverfahren nach Anspruch 1, das nach dem Bestimmungsschritt einen Schritt (80, 81) des Schickens einer Ankündigungsnachricht, die ein Ziel der auszuführenden Datenübertragung angibt, umfasst.

5. Kommunikationsverfahren nach Anspruch 4, das nach dem Schritt (80, 81) des Schickens einen Schritt des Versetzens in den Ruhezustand bis zur Datenübertragung umfasst.

6. Kommunikationsverfahren nach Anspruch 1, das nach dem Schritt (60) des Berichtens oder Annullierens einen Schritt (41) des Empfangens einer Ankündigungsnachricht, die eine Datenübertragung angibt, deren Knoten das Ziel ist, und einen Schritt (45) des Versetzens in den Ruhezustand bis zu der Datenübertragung, deren Knoten das Ziel ist, umfasst.

7. Kommunikationsverfahren nach Anspruch 1, das außerdem Folgendes umfasst:
- einen Schritt (95) des Zählens einer Gesamtanzahl von Sendevorgängen (C2) während der Zeitintervalle und
- wenn die Gesamtanzahl von Sendevorgängen (C2) kleiner als der vorgegebene Schwellenwert (T) ist, einen zweiten Schritt des Bestimmens wenigstens eines der Übertragungskanäle als Funktion der Gesamtanzahl von Sendevorgängen (C2).

8. Kommunikationsverfahren nach Anspruch 7, wobei der zweite Bestimmungsschritt außerdem einen Schritt (97) des Teilnehmens an wenigstens einem Auswahlmechanismus, der ein Konkurrenzfenster (19, 20, 21) verwendet, das als Funktion der Gesamtanzahl von Sendevorgängen bestimmt wird, und, falls der Knoten von dem Auswahlmechanismus ausgewählt wird, das Bestimmen eines der Übertragungskanäle (15, 16, 17), der dem Konkurrenzfenster entspricht, umfasst.

9. Kommunikationsknoten (1), der dazu bestimmt ist, eine Datenübertragung in einem Telekommunikationsnetz (2) auszuführen, wobei der Knoten (1) Folgendes umfasst:
- Mittel zum Auswählen eines Zeitintervalls j in einem Konkurrenzfenster (18), das mehrere Zeitintervalle enthält und einer Übertragungsperiode vorhergeht,
- Mittel zum Abtasten der Zeitintervalle, die dem Zeitintervall j vorhergehen,
**dadurch gekennzeichnet, dass** die Übertragungsperiode mehrere Übertragungskanäle (15, 16, 17) aufweist und dass der Knoten (1) Folgendes umfasst:
- Mittel zum Zählen einer Anzahl von Sendevorgängen während der Zeitintervalle, die dem Zeitintervall j vorhergehen,
- Mittel zum Berichten oder Annullieren der Datenübertragung, wenn die Anzahl von Sendevorgängen größer als ein Schwellenwert ist,
- Mittel zum Aussenden während des Zeitintervalls j und Mittel zum Bestimmen eines der Übertragungskanäle als Funktion der Anzahl von Sendevorgängen, wenn die Anzahl von Sendevorgängen kleiner oder gleich dem Schwellenwert ist.

10. Kommunikationsnetz (2), das mehrere Knoten (1) nach Anspruch 9 umfasst.

11. Computerprogramm, das Anweisungen umfasst, um die Schritte des Kommunikationsverfahrens nach Anspruch 1 auszuführen, wenn das Programm von einem Computer ausgeführt wird.

12. Computerlesbarer Informationsträger, der Anweisungen eines Computerprogramms nach Anspruch 11 enthält.

## Claims

1. Method of communication executed by a node (1) of a telecommunication network (2), said node (1) having a data transmission to be performed, said method comprising:
- a step (52) of selecting a time interval j in a contention window (18) comprising several time intervals and preceding a transmission period,
- a step (55) of listening to the time intervals preceding the time interval j,
**characterized in that** said transmission period exhibits several transmission channels (15, 16, 17), and **in that** the method comprises:
- a step (58) of counting a number of sends during said time intervals preceding the time interval j,
- when the number of sends is greater than a predetermined threshold, a step (60) of postponing or of cancelling said data transmission,
- when the number of sends is less than or equal to the predetermined threshold, a step of sending (62, 63) during the time interval j and a step of determining one of said transmission channels, as a function of said number of sends.

2. Method of communication according to Claim 1, in which said determining step comprises a step of participating in a selection mechanism using a contention window (19, 20, 21) determined as a function of said number of sends and, if the node is selected during said selection mechanism, the determination of one of said transmission channels (15, 16, 17) corresponding to said contention window.

3. Method of communication according to Claim 2, in which said determining step comprises, if said node is not selected during said selection mechanism, a second step of participating in a second selection mechanism using a second contention window (20, 21).

4. Method of communication according to Claim 1, comprising, after said determining step, a step (80, 81) of dispatching an announcement message indicating a destination of said data transmission to be performed.

5. Method of communication according to Claim 4, comprising, after said dispatching step (80, 81), a step of placing on standby until said data transmission.

6. Method of communication according to Claim 1, comprising, after said postponing or cancelling step (60), a step (41) of receiving an announcement message indicating a data transmission of which said node is the destination, and a step (45) of placing on standby until said data transmission of which said node is the destination.

7. Method of communication according to Claim 1, furthermore comprising:
- a step (95) of counting a total number of sends (C2) during said time intervals, and
- when the total number of sends (C2) is less than the predetermined threshold (T), a second step of determining at least one of said transmission channels, as a function of said total number of sends (C2).

8. Method of communication according to Claim 7, in which said second determining step comprises a step (97) of participating in at least one selection mechanism using a contention window (19, 20, 21) determined as a function of said total number of sends and, if the node is selected during said selection mechanism, the determination of one of said transmission channels (15, 16, 17) corresponding to said contention window.

9. Communication node (1) intended to perform a transmission of the data in a telecommunication network (2), said node (1) comprising:
- means for selecting a time interval j in a contention window (18) comprising several time intervals and preceding a transmission period,
- means for listening to the time intervals preceding the time interval j,
**characterized in that** said transmission period exhibits several transmission channels (15, 16, 17), and **in that** the node (1) comprises:
- means for counting a number of sends during said time intervals preceding the time interval j,
- means for postponing or cancelling said data transmission when the number of sends is greater than a threshold,
- means for sending during the time interval j and means for determining one of said transmission channels, as a function of said number of sends, when the number of sends is less than or equal to the threshold.

10. Communication network (2) comprising a plurality of nodes (1) according to Claim 9.

11. Computer program comprising instructions for the execution of the steps of the method of communication according to Claim 1 when said program is executed by a computer.

12. Information medium readable by a computer and comprising instructions of a computer program according to Claim 11.
